# EUROPÄISCHE PATENTSCHRIFT

(11) **EP 1 903 865 B1**
(45) Veröffentlichungstag und Bekanntmachung des Hinweises auf die Patenterteilung: **02.09.2009**
(21) Anmeldenummer: 06762207.6
(22) Anmeldetag: 27.06.2006
(51) Int. Cl.: A01N 41/10, A01N 43/70, A01N 37/40, A01N 43/82, A01N 47/36, A01N 57/20, A01N 37/22, A01N 25/32, A01P 13/00, A01P 13/02

(54) **SYNERGISTISCHE KULTURPFLANZENVERTRÄGLICHE HERBIZIDE MITTEL ENTHALTEND HERBIZIDE AUS DER GRUPPE DER BENZOYLCYCLOHEXADIONE**
SYNERGISTIC CULTIGEN-COMPATIBLE HERBICIDAL AGENTS CONTAINING HERBICIDES FROM THE GROUP ENCOMPASSING BENZOYLCYCLOHEXADIONES
PRODUITS HERBICIDES SYNERGIQUES COMPATIBLES AVEC LES PLANTES DE CULTURE ET CONTENANT DES HERBICIDES ISSUS DU GROUPE DES ENZOYLCYCLOHEXADIONES

(30) Priorität: 07.07.2005 DE 102005031789
(43) Veröffentlichungstag der Anmeldung: 02.04.2008
(73) Patentinhaber: BAYER CROPSCIENCE AG, 40789 Monheim (DE)
(72) Erfinder: ROSINGER, Christopher, 65719 Hofheim (DE); HILLS, Martin, 65510 Idstein (DE); MÜLLER, Stephan, 65529 Waldems (DE); WEGMANN, Thomas, 40764 Langenfeld (DE)
(86) Internationale Anmeldenummer: PCT/EP2006/006180
(87) Internationale Veröffentlichungsnummer: WO 2007/006415

(56) Entgegenhaltungen:
- WO-A-02/085120
- WO-A-02/091831
- WO-A-03/020035
- WO-A-03/047340

## Beschreibung

Synergistische kulturplanzenverträgliche herbizide Mittel enthaltend Tembotrione als Herbizid aus der Gruppe der Benzoylcyclohexandione

Die Erfindung betrifft das technische Gebiet der Pflanzenschutzmittel, die gegen unerwünschten Pflanzenwuchs eingesetzt werden können und als Wirkstoffe eine Kombination von mindestens zwei Herbiziden und einem Safener enthalten.

Spezieller betrifft sie herbizide Mittel, welche als Wirkstoff Tembotrione als Herbizid aus der Gruppe der Benzoylcyclohexandione in Kombination mit mindestens einem weiteren Herbizid und einem Safener enthalten.

Herbizide aus der oben genannten Gruppe der Benzoylcyclohexandione sind aus zahlreichen Dokumenten bekannt. So werden beispielsweise in US 6,376,429 Benzoylcyclohexandione mit herbizider Wirkung beschrieben.

Die Anwendung der aus diesen Schriften bekannten Benzoylcyclohexandione ist jedoch in der Praxis häufig mit Nachteilen verbunden. So ist die herbizide Wirksamkeit der bekannten Verbindungen nicht immer ausreichend, oder bei ausreichender herbizider Wirksamkeit werden unerwünschte Schädigungen der Nutzpflanzen beobachtet.

Die Wirksamkeit von Herbiziden hängt unter anderem von der Art des eingesetzten Herbizids, dessen Aufwandmenge, der Zubereitung, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen gegenüber einem Wirkstoff, die bei längerer Anwendung oder geographisch begrenzt auftreten können. Solche Veränderungen äußern sich als mehr oder weniger starke Wirkungsverluste und lassen sich nur bedingt durch höhere Aufwandmengen der Herbizide ausgleichen.

Eine Möglichkeit zur Verbesserung des Anwendungsprofils eines Herbizids kann in der Kombination des Wirkstoffs mit einem oder mehreren anderen Wirkstoffen bestehen. Aus WO 03/043422 und WO 03/043423 sind Kombinationen von herbizid wirksamen Benzoyl-Derivaten zusammen mit anderen Herbiziden bekannt. Aus WO 03/047340 sind synergistische herbizide Mittel enthaltend Tembotrione und weitere Herbizide wie Atrazin, Bromoxynil, Dicamba, Flufenacet, Foramsulfuron, Glufosinate, Glyphosate, Nicosulfuron, Terbuthylazine und Metolachlor bekannt. WO 02/085120 offenbart herbizide Mittel enthaltend Tembotrione und Safener wie Isoxadifen-ethyl. WO 02/091831 beschreibt herbizide Mittel enthaltend Tembotrione sowie Düngemittel und Adjuvantien. Allerdings treten bei der kombinierten Anwendung mehrerer Wirkstoffe nicht selten Phänomene der physikalischen und biologischen Unverträglichkeit auf, z. B. mangelnde Stabilität einer gemeinsamen Formulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Wegen der Vielzahl möglicher Einflußfaktoren gibt es praktisch keinen einzelnen Wirkstoff, der die gewünschten Eigenschaften für unterschiedliche Anforderungen, insbesondere hinsichtlich der Schadpflanzenspezies und der Klimazonen, in sich vereinigt. Dazu kommt die ständige Aufgabe, die Wirkung mit immer geringerer Aufwandmenge an Herbiziden zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Wie bei vielen anderen herbiziden Wirkstoffen sind auch Benzoylcyclohexandione, insbesondere in Kombination mit anderen Herbiziden nicht immer ausreichend verträglich mit (d.h. nicht selektiv genug bei) einigen wichtigen Kulturpflanzen, wie Mais, Reis oder Getreide, so daß ihrem Einsatz enge Grenzen gesetzt sind. Sie können deshalb in manchen Kulturen nicht oder nur in so geringen Aufwandmengen eingesetzt werden, daß die erwünschte breite herbizide Wirksamkeit gegenüber Schadpflanzen nicht gewährleistet ist. Speziell können viele der genannten Herbizide nicht vollständig selektiv gegen Schadpflanzen in Mais, Reis, Getreide, Zuckerrohr und einigen anderen Kulturen eingesetzt werden.

Zur Überwindung dieser Nachteile ist es bekannt, herbizide Wirkstoffe in Kombination mit einem sogenannten Safener oder Antidot einzusetzen. So sind beispielsweise in US 6,884,757 verschiedene Kombinationen von Benzoylcyclohexandionen mit einer Vielzahl von Safenem beschrieben.

Unter einem Safener ist eine Verbindung zu verstehen, die die phytotoxischen Eigenschaften eines Herbizides gegenüber Nutzpflanzen aufhebt oder verringert, ohne daß die herbizide Wirkung gegenüber Schadpflanzen wesentlich vermindert wird.

Die Auffindung eines Safeners für eine bestimmte Gruppe von Herbiziden ist nach wie vor eine schwierige Aufgabe, da die genauen Mechanismen, durch die ein Safener die Schadwirkung von Herbiziden verringert, nicht bekannt sind. Die Tatsache, daß eine Verbindung in Kombination mit einem bestimmten Herbizid als Safener wirkt, läßt daher keine Rückschlüsse darauf zu, ob eine solche Verbindung auch mit anderen Gruppen von Herbiziden Safenerwirkung aufweist. So hat sich bei der Anwendung von Safenern zum Schutz der Nutzpflanzen vor Schädigungen des Herbizids gezeigt, daß die Safener in vielen Fällen immer noch gewisse Nachteile aufweisen können. Dazu zählen:
- der Safener vermindert die Wirkung der Herbizide gegen die Schadpflanzen,
- die nutzpflanzenschützenden Eigenschaften sind nicht ausreichend,
- in Kombination mit einem gegebenen Herbizid ist das Spektrum der Nutzpflanzen, in denen der Safener/Herbizid-Einsatz erfolgen soll, nicht ausreichend groß,
- ein gegebener Safener ist nicht mit einer ausreichend großen Anzahl von Herbiziden kombinierbar.

Aufgabe der vorliegenden Erfindung ist die Bereitstellung von herbiziden Mitteln mit gegenüber dem Stand der Technik verbesserten Eigenschaften.

Ein Gegenstand der Erfindung sind ausgewählte herbizide Mittel, gekennzeichnet durch einen wirksamen Gehalt an
a) dem Herbizid Tembotrione der Formel A, sowie dessen landwirtschaftlich üblichen Salze (Komponente A), 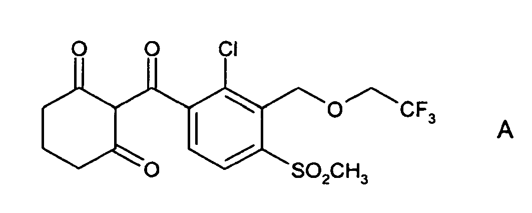 einem Herbizid (Komponente B) aus der Gruppe umfassend die Wirkstoffe Atrazin (B1), Bromoxynil (B2), Dicamba (B3) und Terbuthylazine (B9) (Komponente B),
   und
   einer antidotisch wirksamen Menge des Safeners Isoxadifen-diethyl (C1), (Komponente C);
   oder
b) dem Herbizid Tembotrione, sowie dessen landwirtschaftlich üblichen Salze (Komponente A), den Herbiziden Terbuthylazine (B9) und Metolachlor (B10) (Komponenten B), und einer antidotisch wirksamen Menge des Safeners Isoxadifen-diethyl (C1), (Komponente C),
wobei diese Mittel die Komponenten A, B und C in einem Gewichtsverhältnis von x:y:z enthalten, worin x, y und z jeweils unabhängig voneinander Werte von 1 bis 200, vorzugsweise 1 bis 100, annehmen können.

Im Folgenden sind die Begriffe "Komponente A", "Herbizid A" und "Wirkstoff A" als gleichbedeutend zu verstehen. Analoges gilt für die Begriffe Komponente B", "Herbizid B" und "Wirkstoff B" sowie "Komponente C", "Safener C" und "Wirkstoff C".

Das Herbizid A ist beispielsweise aus US 6,376,429 bekannt. Die chemischen Strukturen der anderen oben mit ihren "common names" genannten Wirkstoffe sind beispielsweise aus "The Pesticide Manual" 13. Auflage, 2003, British Crop Protection Council, bekannt. Wenn im Rahmen dieser Beschreibung die Kurzform des "common name" eines Wirkstoffs verwendet wird, so sind damit jeweils alle gängigen Derivate, wie die Ester und Salze, und Isomere, insbesondere optische Isomere umfasst, insbesondere die handelsübliche Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfaßten Verbindungen, häufig eine bevorzugte Verbindung.

Die erfindungsgemäßen herbiziden Mittel weisen in bevorzugter Ausführungsform synergistische Wirkungen bei gleichzeitiger hoher Verträglichkeit gegenüber Kulturpflanzen auf. Die synergistischen Wirkungen und die hohe Verträglichkeit gegenüber Kulturplanzen können z.B. bei gemeinsamer Ausbringung der Komponenten A, B und C beobachtet werden, sie können jedoch häufig auch bei zeitlich versetzter Anwendung (Splitting) festgestellt werden. Möglich ist auch die Anwendung der einzelnen Herbizide und Safener oder der Herbizid-Safener-Kombinationen in mehreren Portionen (Sequenzanwendung), z. B. Anwendungen im Vorauflauf, gefolgt von Nachauflauf-Applikationen oder frühe Nachauflaufanwendungen, gefolgt von Applikationen im mittleren oder späten Nachauflauf. Bevorzugt ist dabei die gemeinsame oder die zeitnahe Anwendung der Wirkstoffe der erfindungsgemäßen Herbizid-Kombination.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Erfindungsgemäß umfasst sind auch solche herbiziden Mittel, die neben den Komponenten A, B und C noch ein oder mehrere weitere agrochemische Wirkstoffe anderer Struktur enthalten, wie Herbizide, Insektizide, Fungizide oder Safener. Für solche herbiziden Mittel gelten die vor- und nachstehend erläuterten bevorzugten Bedingungen ebenfalls.

Ebenso erfindungsgemäß umfasst sind insbesondere auch solche herbiziden Mittel, die neben den Komponenten A, B und C noch Düngenmittel, wie Ammoniumsulfat, Ammoniumnitrat, Harnstoff, Kaliumnitrat und Mischungen davon, enthalten.
Für solche herbiziden Mittel gelten die vor- und nachstehend erläuterten bevorzugten Bedingungen ebenfalls.

Weiterhin erfindungsgemäß umfasst sind auch solche herbiziden Mittel, die neben den Komponenten A, B und C noch Adjuvantien, wie Emulgatoren, Dispergatoren, mineralische und pflanzliche Öle und Mischungen davon, enthalten.
Für solche herbiziden Mittel gelten die vor- und nachstehend erläuterten bevorzugten Bedingungen ebenfalls.

Von besonderem Interesse sind herbizide Mittel mit einem Gehalt an einer oder mehreren der folgenden Kombinationen von drei Verbindungen (A + B + C): (A + B1 + C1), (A + B2 + C1), (A + B3 + C1), (A + B9 + C1).

In einer weiteren bevorzugten Ausführungsform enthalten die erfindungsgemäßen herbiziden Mittel das Herbizid A, zwei verschiedene Komponenten B und einen Safener C.

In den erfindungsgemäßen herbiziden Mitteln benötigt man in der Regel Aufwandmengen im Bereich von 1 bis 2000 g, vorzugsweise 10 bis 1000 g, besonders bevorzugt 10 bis 300 g Aktivsubstanz pro Hektar ai/ha) der Komponente A und 1 bis 2000 g, vorzugsweise 1 bis 1000 g, besonders bevorzugt 5 bis 500 g, der Komponente B sowie 1 bis 1000 g, vorzugsweise 1 bis 500 g, besonders bevorzugt 5 bis 250 g der Komponente C.

Die Gewichtsverhältnisse der Komponenten A zu B einerseits und (A+B) zu C andererseits können in weiten Bereichen variiert werden. Vorzugsweise ist das Mengenverhältnis der Komponenten A zu B im Bereich von 1:100 bis 100:1, besonders bevorzugt im Bereich von 1:50 bis 50:1, insbesondere im Bereich von 1:20 bis 20:1. Vorzugsweise ist das Mengenverhältnis der Komponenten (A+B) zu C im Bereich von 1:10 bis 50:1, insbesondere im Bereich von 1:5 bis 20:1. Die vorstehend genannten Bereiche gelten auch für den Fall, daß die erfindungsgemäßen herbiziden Mittel mehr als eine Komponente B und/oder Komponente C enthalten. Die genannten Zahlenwerte gelten dann für die summierten Einzelwerte der Komponenten B beziehungsweise C.

Optimale Gewichtsverhältnisse können vom jeweiligen Applikationsgebiet, Unkrautspektrum und der eingesetzten Wirkstoffkombination abhängen und in Vorversuchen bestimmt werden.

Die erfindungsgemäßen Mittel lassen sich zur selektiven Bekämpfung von annuellen und perennierenden monokotylen und dikotylen Schadpflanzen in Getreide-(beispielsweise Gerste, Hafer, Roggen, Weizen), Mais- und Reiskulturen sowie in transgenen Nutzpflanzenkulturen oder auf klassischem Wege selektierten Nutzpflanzenkulturen, die gegen die Wirkstoffe A und B resistent sind, einsetzen. Ebenso sind sie zur Bekämpfung unerwünschter Schadpflanzen einsetzbar in Plantagenkulturen wie Ölpalme, Kokospalme, Gummibaum, Zitrus, Ananas, Baumwolle, Kaffee, Kakao u.a. sowie im Obst- und Weinbau. Besonders geeignet sind sie auf Grund ihrer guten Verträglichkeit für die Anwendung in Getreide und Mais, ganz besonders in Mais.

Die erfindungsgemäßen Mittel erfassen ein breites Unkrautspektrum. Sie eignen sich zur Bekämpfung von annuellen und perennierenden Schadpflanzen wie z.B. aus den Spezies Abuthylon, Alopecurus, Avena, Chenopodium, Cynoden, Cyperus, Digitaria, Echinochloa, Elymus, Galium, Ipomoea, Kochia, Lamium, Matricaria, Polygonum, Scirpus, Setaria, Sorghum, Veronica, Viola und Xanthium.

Ein weiterer Vorteil der erfindungsgemäßen Mittel besteht auch in ihrer ausgezeichneten Wirkung gegen viele mittlerweile gegen Sulfonylharnstoffe resistent gewordene Schadpflanzen, wie beispielsweise Kochia.

Gegenstand der Erfindung ist auch ein Verfahren zur Bekämpfung von unerwünschtem Pflanzenwuchs, **dadurch gekennzeichnet, daß** man das Herbizid A mit einem oder mehreren Herbiziden B und einem Safener C auf die Schadpflanzen, Pflanzenteile davon oder die Anbaufläche appliziert.

Die erfindungsgemäßen herbiziden Mittel zeichnen sich auch dadurch aus, daß die in den Kombinationen verwendeten und wirksamen Dosierungen der Komponenten A und B gegenüber einer Einzeldosierung verringert ist, so daß eine Reduzierung der nötigen Aufwandmengen der Wirkstoffe ermöglicht wird (synergistischer Effekt). Gleichzeitig wird die Verträglichkeit gegenüber Kulturpflanzen durch die Anwesenheit des Safeners C stärker erhöht, als bei einer Kombination des Safeners C mit dem Herbizid A oder einem Herbizid B. Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Diese Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Die erfindungsgemäßen herbiziden Mittel können sowohl als Mischformulierungen der Herbizide A und B sowie des Safeners C, gegebenenfalls mit weiteren üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser oder mit wässrigen Lösungen von Düngemitteln, beispielsweise Ammoniumnitrat und Ammoniumsulfat hergestellt werden.

Die erfindungsgemäßen herbiziden Mittel können auf verschiedene Arten formuliert werden, je nachdem welche biologischen und/oder chemisch-physikalischen Parameter vorgegeben sind. Als allgemeine Formulierungsmöglichkeiten kommen z.B. in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Ölsuspensionskonzentrat (SC), Dispersionen auf Öl- oder Wasserbasis, Suspoemulsionen, Stäubemittel (DP), Beizmittel, Granulate zur Boden- oder Streuapplikation oder wasserdispergierbare Granulate (WG), wasserdispergierbares Granulat (WDG), wasseremulgierbares Granulat (WEG), ULV-Formulierungen, Mikrokapseln oder Wachse.

Die einzelnen Formulierungstypen sind im Prinzip bekannt und werden z.B. beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London. Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden:
Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 0,2 bis 95 Gew.-%, Komponenten A, B und C, wobei je nach Formulierungsart folgende Konzentrationen üblich sind: In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen. Staubförmige Formulierungen enthalten meistens 5 bis 20 Gew.-% an Wirkstoff, versprühbare Lösungen etwa 0,2 bis 25 Gew.-% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%. Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser oder mit wässrigen Lösungen von Düngemitteln, beispielsweise Ammoniumnitrat und Ammoniumsulfat, gemischt und die erhaltene Spritzbrühe ausgebracht wird.

Eine gemeinsame herbizide Formulierung der erfindungsgemäßen herbiziden Mittel hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

### A. Formulierungsbeispiele

a) Ein Stäubemittel (WP) wird erhalten, indem man 10 Gew.-Teile eines Wirkstoffs/Wirksstoffgemischs und 90 Gew.-Teile Talkum als Inertstoff mischt und in einer Schlagmühle zerkleinert.
b) Ein in Wasser leicht dispergierbares, benetzbares Pulver (WG) wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (Triton X 207), 3 Gew.-Teilen Isotridecanolpolyglykolether (8 EO) und 71 Gew.-Teilen paraffinischem Mineralöl (Siedebereich z.B. ca. 255 bis 277° C mischt und in einer Reibkugelmühle auf eine Feinheit von unter 5 Mikron vermahlt.
d) Ein emulgierbares Konzentrat (EC) wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.
e) Ein in Wasser dispergierbares Granulat wird erhalten indem man
   75 Gew.-Teile eines Wirkstoffs/Wirksstoffgemischs,
   10 Gew.-Teile ligninsulfonsaures Calcium,
   5 Gew.-Teile Natriumlaurylsulfat, 3 Gew.-Teile Polyvinylalkohol und
   7 Gew.-Teile Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   25 Gew.-Teile eines Wirkstoffs/Wirksstoffgemischs,
   5 Gew.-Teile 2,2'-dinaphthylmethan-6,6'-disulfonsaures Natrium,
   2 Gew.-Teile oleoylmethyltaurinsaures Natrium,
   1 Gew.-Teil Polyvinylalkohol,
   17 Gew.-Teile Calciumcarbonat und
   50 Gew.-Teile Wasser
auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

### B. Biologische Beispiele

### 1. Herbizide Wirkung im Nachauflauf

Samen von mono- bzw. dikotylen Unkraut- bzw. Kulturpflanzen werden in Holzfasertöpfen oder in Plastiktöpfen in sandigem Lehmboden ausgelegt, mit Erde abgedeckt und im Gewächshaus, während der Vegetationsperiode auch im Freien außerhalb des Gewächshauses, unter guten Wachstumsbedingungen angezogen. 2-3 Wochen nach der Aussaat werden die Versuchspflanzen im Ein- bis Drei-Blattstadium behandelt. Die als Spritzpulver (WP) oder Flüssigkeit (EC) formulierten Testverbindungen werden in verschiedenen Dosierungen mit einer Wasseraufwandmenge von umgerechnet 300 l/ha unter Zusatz von Netzmittel (0,2 bis 0,3 %) auf die Pflanzen und die Bodenoberfläche gespritzt. 3 bis 4 Wochen nach Behandlung der Versuchspflanzen wird die Wirkung der Präparate visuell im Vergleich zu unbehandelten Kontrollen bonitiert (herbizide Wirkung in Prozent (%): 100 % Wirkung = Pflanzen sind abgestorben, 0 % Wirkung = wie Kontrollpflanzen).

Die überraschend gute Wirkung der erfindungsgemäßen herbiziden Mitteln wurde in zahlreichen Vergleichsversuchen bestätigt. Dazu wurde in einer ersten Versuchsreihe die herbizide Wirkung von aus dem Stand der Technik bekannten Mischungen enthaltend Herbizid A und Herbizid B verglichen mit der herbiziden Wirkung eines erfindungsgemäßen Mittels enthaltend jeweils die selben Herbizide und einen Safener. Überraschenderweise zeigte sich, daß die herbizide Wirkung durch den Safener noch gesteigert wurde; siehe Tabellen 1 bis 4.

Die Abkürzungen bedeuten:

| | | | |
|---|---|---|---|
| BRAPP | Brachiaria platyphylla | POLCO | Fallopia convolvulus |
| SETFA | Setaria faberi | SETVI | Setaria viridis |
| SORHA | Sorghum halepense | | |

**Tabelle 1: Wirkung im Nachauflauf**

| **Verbindung** | **Dosierung** | **Herbizide Wirkung** | |
|---|---|---|---|
| | **[g a.i./ha]** | **BRAPP** | **SORHA** |
| A + B1 | 200 + 200 | 85% | 65% |
| A + B1 + C1 | 200 + 200 + 100 | 90% | 83% |

**Tabelle 2: Wirkung im Nachauflauf**

| **Verbindung** | **Dosierung** | **Herbizide Wirkung** | |
|---|---|---|---|
| | **[g a.i./ha]** | **BRAPP** | **SETVI** |
| A + B3 | 200 + 200 | 70% | 68% |
| A + B3+ C1 | 200 + 200 + 100 | 85% | 70% |

**Tabelle 3: Wirkung im Nachauflauf**

| **Verbindung** | **Dosierung** | **Herbizide Wirkung** | |
|---|---|---|---|
| | **[g a.i./ha]** | **SETFA** | **SORHA** |
| A + B2 | 200 + 200 | 88% | 68% |
| A + B2+ C1 | 200 + 200 + 100 | 90% | 70% |

**Tabelle 4: Wirkung im Nachauflauf**

| **Verbindung** | **Dosierung** | **Herbizide Wirkung** | |
|---|---|---|---|
| | **[g a.i./ha]** | **SORHA** | **POLCO** |
| A + B9 | 200 + 200 | 88% | 90% |
| A + B9+ C1 | 200 + 200 + 100 | 93% | 93% |

In einer zweiten Versuchsreihe wurde die herbizide Wirkung und die Schädigung von Mais der erfindungsgemäßen Mittel (A + Bx + C1) verglichen mit des Herbizids allein (A) beziehungsweise mit der des aus dem Stand der Technik bekannten herbiziden Mittels (A + C1). Überaschenderweise zeigte sich, daß die erfindungsgemäßen Mittel nicht nur eine etwas höhere herbizide Wirkung aufweisen, sondern gleichzeitig auch eine geringere Schädigung der Kulturpflanze zeigen; siehe Tabelle 5, in der die herbizide Wirkung als Mittelwert der herbiziden Wirkung gegen die Schadpflanzen Abutilon theophrasti, Ambrosia elatior, Digitaria sanguinalis, Echinochloa crus galli, Pharbitis purpureum, Fallopia convolvulus, Setaria faberi, Setaria viridis, Sorghum halepense, Brachiaria platyphylla angegeben ist.

**Tabelle 5: Wirkung im Nachauflauf**

| **Verbindung** | **Dosierung** **[g a.i./ha]** | **Herbizide Wirkung** | **Schädigung in Mais** | **Verringerung der Schädigung in Mais** |
|---|---|---|---|---|
| A | 200 | 86% | 11% | -- |
| A + C1 | 200 + 100 | 83% | 6% | -45% |
| A + B1+ C1 | 200 + 200+ 100 | 93% | 0% | -100% |
| A + B2+ C1 | 200 + 200+ 100 | 87% | 4% | -64% |
| A + B3+ C1 | 200 + 200+ 100 | 84% | 3% | -73% |
| A + B9 + B10 + C1 | 200 + 200 + 200 + 100 | 94% | 4% | -64% |

## Patentansprüche

1. Herbizide Mittel, **gekennzeichnet durch** einen wirksamen Gehalt an
a) dem Herbizid Tembotrione der Formel A, sowie dessen landwirtschaftlich üblichen Salze (Komponente A), 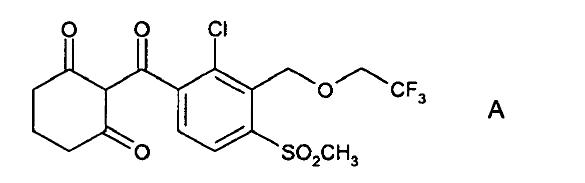 einem Herbizid (Komponente B) aus der Gruppe umfassend die Wirkstoffe Atrazin, Bromoxynil, Dicamba und Terbuthylazine (Komponente B), und
einer antidotisch wirksamen Menge des Safeners Isoxadifen-diethyl (Komponente C);
oder
b) dem Herbizid Tembotrione, sowie dessen landwirtschaftlich üblichen Salze (Komponente A), den Herbiziden Terbuthylazine und Metolachlor (Komponenten B), und einer antidotisch wirksamen Menge des Safeners Isoxadifen-diethyl (Komponente C).

2. Herbizide Mittel nach Anspruch 1, **dadurch gekennzeichnet, daß** sie die Komponenten A, B und C in einem Gewichtsverhältnis von x:y:z enthalten, worin x, y und z jeweils unabhängig voneinander Werte von 1 bis 200 annehmen können.

3. Herbizide Mittel nach Anspruch 2, worin x, y und z jeweils unabhängig voneinander Werte von 1 bis 100 annehmen können.

4. Herbizide Mittel nach einem der Ansprüche 1 bis 3 enthaltend zusätzlich im Pflanzenschutz übliche Formulierungsmittel.

5. Herbizide Mittel nach einem der Ansprüche 1 bis 4 enthaltend zusätzlich Düngemittel.

6. Herbizide Mittel nach einem der Ansprüche 1 bis 5 enthaltend zusätzlich Adjuvantien.

7. Verfahren zur Bekämpfung von unerwünschtem Pflanzenwuchs, **dadurch gekennzeichnet, daß** die Komponenten A, B und C, definiert gemäß einem der Ansprüche 1 bis 6, gemeinsam oder getrennt auf die Pflanzen, Pflanzenteile, Pflanzensamen oder die Fläche, auf der die Pflanzen wachsen, appliziert werden.

8. Verfahren nach Anspruch 7 zur selektiven Bekämpfung von Schadpflanzen in Nutzpflanzenkulturen.

9. Verfahren nach Anspruch 8 zur Bekämpfung von Schadpflanzen in monokotylen Pflanzenkulturen.

10. Verfahren nach Anspruch 8 oder 9, worin die Pflanzenkulturen gentechnisch verändert oder durch Mutationsselektion erhalten sind.

## Claims

1. A herbicidal composition, comprising an effective amount of
a) the herbicide tembotrione of the formula A, and its agriculturally customary salts (component A), 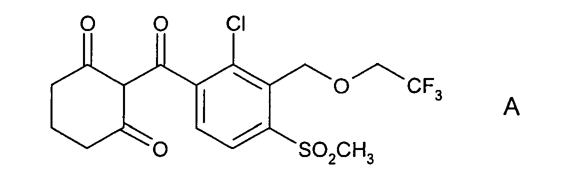 a herbicide (component B) from the group comprising the active compounds atrazine, bromoxynil, dicamba and terbuthylazine (component B) and
an antidotically effective amount of the safener isoxadifen-diethyl (component C);
or
b) the herbicide tembotrione, and its agriculturally customary salts (component A), the herbicides terbuthylazine and metolachlor (components B), and an antidotically effective amount of the safener isoxadifen-diethyl (component C).

2. The herbicidal composition as claimed in claim 1, which comprises the components A, B and C in a weight ratio of x:y:z in which x, y and z in each case independently of one another may assume values of from 1 to 200.

3. The herbicidal composition as claimed in claim 2, in which x, y and z in each case independently of one another may assume values of from 1 to 100.

4. The herbicidal composition as claimed in any of claims 1 to 3, additionally comprising formulating agents customary in crop protection.

5. The herbicidal composition as claimed in any of claims 1 to 4, additionally comprising fertilizers.

6. The herbicidal composition as claimed in any of claims 1 to 5, additionally comprising adjuvants.

7. A method for controlling unwanted vegetation, which comprises applying the components A, B and C as defined in any of claims 1 to 6 jointly or separately to the plants, to parts of parts, to plant seeds or to the area in which the plants grow.

8. The method as claimed in claim 7 for the selective control of harmful plants in crops of useful plants.

9. The method as claimed in claim 8 for the control of harmful plants in crops of monocotyledonous plants.

10. The method as claimed in claim 8 or 9 wherein the plant crops are genetically modified or have been obtained by mutation selection.

## Revendications

1. Compositions herbicides, **caractérisées par** une teneur efficace en
a) l'herbicide tembotrione de formule A, ainsi que ses sels d'emploi courant en agriculture (composant A), 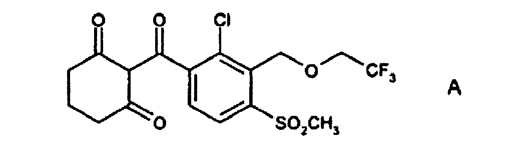 un herbicide (composant B) du groupe comprenant les substances actives atrazine, bromoxynil, dicamba et terbuthylazine (composant B)
et une quantité à effet d'antidote de l'agent phytoprotecteur isoxadifène-diéthyl (composant C)
ou
b) l'herbicide tembotrione, ainsi que ses sels d'emploi courant en agriculture (composant A), les herbicides terbuthylazine et métolachlore (composants B) et une quantité à effet d'antidote de l'agent phytoprotecteur isoxadifène-diéthyl (composant C).

2. Compositions herbicides suivant la revendication 1, **caractérisées en ce qu'**elles contiennent les composants A, B et C dans un rapport en poids x:y:z, où x, y et z peuvent prendre chacun, indépendamment des autres, des valeurs de 1 à 200.

3. Compositions herbicides suivant la revendication 2, dans lesquelles x, y et z peuvent prendre chacun, indépendamment des autres, des valeurs de 1 à 100.

4. Compositions herbicides suivant l'une des revendications 1 à 3, contenant en outre des agents de formulation d'emploi courant dans la protection des plantes.

5. Compositions herbicides suivant l'une des revendications 1 à 4, contenant en outre des engrais.

6. Compositions herbicides suivant l'une des revendications 1 à 5, contenant en outre des adjuvants.

7. Procédé de lutte contre une végétation indésirable, **caractérisé en ce que** les composants A, B et C, définis selon l'une des revendicationbs 1 à 6, sont appliqués ensemble ou séparément sur les plantes, des parties de plantes, les semences des plantes ou l'aire sur laquelle les plantes croissent.

8. Procédé suivant la revendication 7, destiné à la lutte sélective contre des plantes nuisibles dans des cultures de plantes utiles.

9. Procédé suivant la revendication 8, destiné à la lutte contre des plantes nuisibles dans des cultures de plantes monocotylédones.

10. Procédé suivant la revendication 8 ou 9, dans lequel les plantes cultivées sont des plantes génétiquement modifiées ou obtenues par voie de sélection par mutation.
